# EUROPÄISCHE PATENTANMELDUNG

(11) **EP 2 208 918 A1**
(43) Veröffentlichungstag der Anmeldung: **21.07.2010**
(21) Anmeldenummer: 09000601.6
(22) Anmeldetag: 16.01.2009
(51) Int. Cl.: F16K 17/04

(54) **Ventil**

(71) Anmelder: INDAG Gesellschaft für Industriebedarf mbH & Co. Betriebs KG, 69214 Eppelheim (DE)
(72) Erfinder: Wild, Hans-Peter, 69214 Eppelheim (DE); Tilz, Wolfgang, 68723 Schwetzingen (DE)
(74) Vertreter: Grünecker, Kinkeldey, Stockmair & Schwanhäusser Anwaltssozietät

(57) **Zusammenfassung**

Es wird ein Ventil (1), insbesondere ein Sicherheitsventil, mit einem Ventilgehäuse (12) mit einer Ventilöffnung (16), einem der Ventilöffnung (16) zugeordneten Ventilsitz (14) und einem Ventilteil (19) zum Abdichten der Ventilöffnung (16) beschrieben. Um ein derartiges Ventil konstruktiv einfacher und kostengünstiger auszugestalten, wird vorgeschlagen, dass der Ventilsitz (14) einen Dichtwulst in (15) mit einer ringförmigen Dichtfläche (15a) aufweist, der in Richtung des Ventilteils (19) vorsteht.

## Beschreibung

Die Erfindung bezieht sich auf ein Ventil der im Oberbegriff von Anspruch 1 erläuterten Art.

Ventile dieser Art sind in großem Umfange bekannt und weisen ein breit gestreutes Anwendungsgebiet auf und werden beispielsweise als Sicherheitsventil beim Abfüllen von Getränken in Kunststoffbeuteln, im sogenannten "bag-in-tank-System" eingesetzt. Da die dort verwendeten Beutel Wegwerfprodukte sind, besteht Bedarf an konstruktiv einfach und kostengünstig herstellbaren Ventilen, die trotzdem ihre Funktion als Sicherheitsventil zuverlässig erfüllen.

Der Erfindung liegt die Aufgabe zugrunde, ein kostengünstig und einfach aufgebautes Ventil insbesondere ein Sicherheitsventil, zu schaffen.

Die Aufgabe wird durch die im Anspruch 1 angegebenen Merkmale gelöst.

Durch die erfindungsgemäße Ausgestaltung wird eine Abdichtfunktion bereitgestellt, die auch dann noch zuverlässig funktioniert, wenn der Dichtwulst beispielsweise aus einem Kunststoff besteht.

Vorteilhafte Weiterbildungen der Erfindung sind den Unteransprüchen zu entnehmen.

Insbesondere die Kombination des Dichtwulstes mit einer Dichtlippe am Ventilteil hat sich als besonders zweckmäßig und funktionssicher erwiesen. Wird die Auslassöffnung des Ventils bzw. die Abblasöffnung eines Sicherheitsventils zumindest teilweise unterhalb der Dichtfläche des Dichtwulstes angeordnet, so kann sichergestellt werden, dass dort gegebenenfalls ausfallendes Kondensat beim Ansprechen des Sicherheitsventils nicht in das Produkt gelangen und dieses verschmutzen oder kontaminieren könnte. Dadurch kann das Ventil als aseptisches Ventil eingesetzt werden.

Eine weitere Erhöhung der Funktionssicherheit wird durch einen nach seitlich außen vorspringenden Dichtvorsprung erzielt, der bevorzugt an der Außenseite der Dichtlippe vorgesehen ist.

Die Funktionssicherheit wird weiterhin erhöht durch einen hinter der Druckbeaufschlagungsfläche des Ventilteils vorgesehenen Hohlraum, durch den eine positive Federwirkung insbesondere auf die Dichtlippe ausgeübt wird.

Das erfindungsgemäße Ventil kann auf konstruktiv einfacher Weise mit einer Unversehrtheitsanzeige ausgerüstet werden, die ein erfolgtes Ansprechen des Ventils anzeigt, auch wenn das Ventil wieder in seine Schließposition zurückgekehrt ist. Eine derartige Unversehrtheitsanzeige ist besonders beim Abfüllen von Lebensmitteln, wie beispielsweise Fruchtsäften oder -konzentraten oder dgl. wichtig, da dort eine Ansprechen des Sicherheitsventils immer ein Zeichen ist, dass beispielsweise ein unberechtigter Zugriff auf den Inhalt des Beutels oder eine unzulässig hohe Erwärmung oder eine mechanische Einwirkung auf den Beutel stattgefunden hat, wobei alle diese Ereignisse die Gefahr bergen, dass der Inhalt des Beutels nicht mehr einwandfrei ist.

Durch die Ausgestaltung der Unversehrtheitsanzeige mit einem vom Sicherheitsventil bewegbaren Stößel und einem Materialpfropf oder -tropfen, der vom Stößel perforiert oder abgesprengt wird, kann diese auch mit den geringen Überdrücken betätigt werden, bei denen das Sicherheitsventil beispielsweise beim Abfüllen von Lebensmitteln ansprechen muss.

Ein Ausführungsbeispiel der Erfindung wird nachfolgend anhand der Zeichnungen näher erläutert. Es zeigen:
- Fig. 1: ein erfindungsgemäßes Ventil in perspektivischer Darstellung,
- Fig. 2: eine schematische Darstellung eines bevorzugten Einsatzgebietes des erfindungsgemäßen Ventils
- Fig. 3: einen Längsschnitt durch das Ventil nach Fig. 1,
- Fig. 4: einen Schnitt durch den Ventilsitz in vergrößerter Darstellung,
- Fig. 5: einen Schnitt durch das Ventilteil in vergrößerter Darstellung, und
- Fig. 6: einen Schnitt durch einen Körper des Ventilteils.

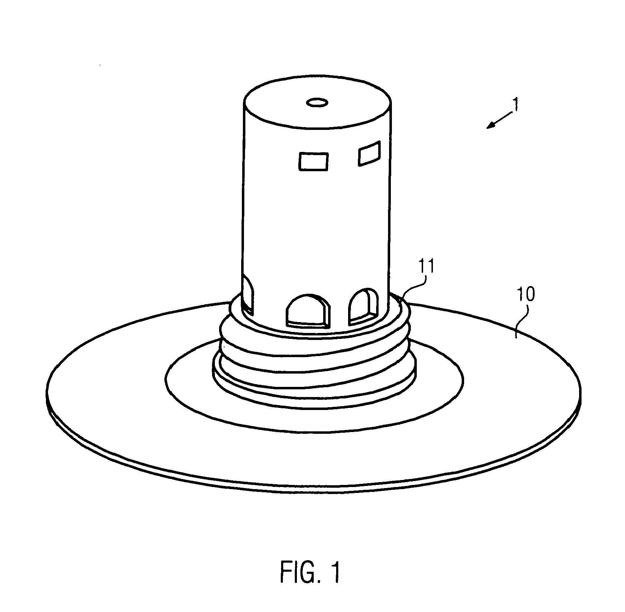

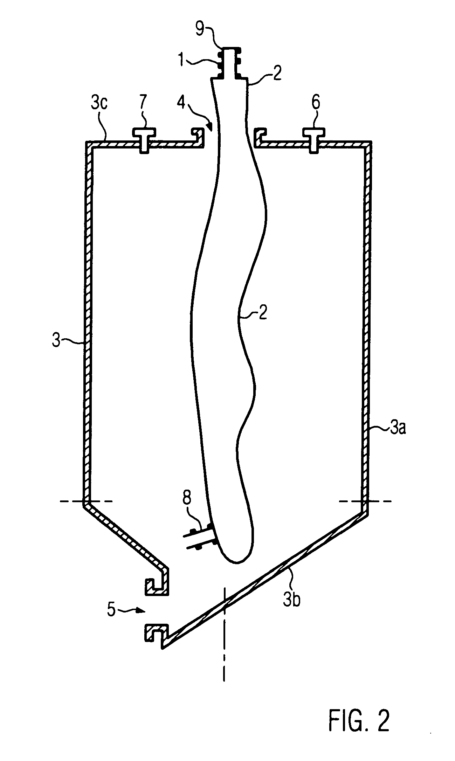

Fig. 1 zeigt in perspektivischer Darstellung die Außenansicht eines Ventils 1, das beispielsweise als Sicherheitsventil in einem "bag-in-tank" System gemäß Fig. 2 einsetzbar ist. Das Ventil 1 wird zu diesem Zweck an einem Einweg-Beutel 2 befestigt, der in einen Umbehälter 3, bevorzugt einen Tank herkömmlicher Bauart, auswechselbar eingesetzt wird. Der Umbehälter 3 enthält Seitenwände 3a und einen trichterförmigen Boden 3b. An der Oberseite ist eine Abdeckung 3c vorgesehen, durch die sich eine obere Öffnung 4 zum Einsetzen des Beutels 2 erstreckt. Am tiefsten Punkt des trichterförmigen Bodens 3b ist ein Auslass 5 vorgesehen, der im dargestellten Ausführungsbeispiel zur Seite weist, jedoch auch senkrecht nach unten weisen kann. In der Abdeckung 3c sind weiterhin Ventile, wie beispielsweise ein Befüll- bzw. Entleerventil 6 und ein (weiteres) Sicherheitsventil 7 vorgesehen.

Die Wandung des Behälters 3 besteht aus einem formstabilen Material, beispielsweise aus einem Metall wie Aluminium oder Edelstahl. Der Behälter kann ein Volumen im Größenbereich von 1000 I aufweisen und für einen Betriebsüberdruck von ca. 1 bar und einen zulässigen Betriebstemperaturbereich von ca. -20°C bis +130°C ausgelegt sein.

Der Behälter 3 ist bevorzugt zum Transport und zur Lagerung von Lebensmitteln, Lebensmittelprodukte oder Lebensmittelgrundstoffen geeignet, die in fließfähiger (flüssig, pastös, partikelförmig) Form vorliegen, also beispielsweise Fruchtzubereitungen, Getränkegrundstoffe oder dgl. sind. Der Behälter 3 eignet sich besonders für den Transport und die Lagerung von Produkten, die steril und/oder unter Luftabschluss gehalten werden müssen.

Um den Sterilisations- und/oder Reinigungsaufwand für den Behälter 3 zu verringern, wird in den Behälter 3 der Beutel oder Inliner aus Kunststoff, bevorzugt aus PE oder PT eingesetzt. Der Beutel 2 weist eine Abmessung auf, die es gestattet, dass er in unbefülltem Zustand durch die obere Öffnung 4 in das Innere des Behälters 3 eingeführt und wieder entnommen werden kann; im befüllten Zustand sich jedoch ringsum an die Wandungen des Behälters 3 anlegt und durch diese gewichtsaufnehmend abgestützt wird.

Der Beutel oder Inliner 2 enthält einen Befüll- und Entleerstutzen 8, der so am Beutel 2 angeordnet und so bemessen ist, dass er durch den Auslass 5 des Behälters 3 passt, sodass auf diesem Weg der Beutel 2 befüllt und entleert werden kann.

Am oberen Bereich des Beutels 2 ist ein Halterungsstutzen 9 vorgesehen, der mit dem Ventil 1 versehen ist. Der Halterungsstutzen 9 ist derart angeordnet und bemessen, dass er den Beutel 2 in der Öffnung 4 sichern kann. Der Halterungsstutzen 9 bleibt bevorzugt am höchsten Punkt des Beutels 2, sobald dieser im Tank 3 aufgenommen ist.

Zum Befüllen wird der Beutel 2 im Behälter 3 so platziert, dass der Befüll- und Entleerstutzen 8 durch den Auslass 4 ragt und dort fixiert wird. Der Halterungsstutzen 9 wird in der Öffnung 3 fixiert. Dann wird Produkt eingefüllt, wobei die durch den sich ausdehnenden Beutel 2 verdrängte Luft im Behälter 3 durch das Ventil 6 entweicht.

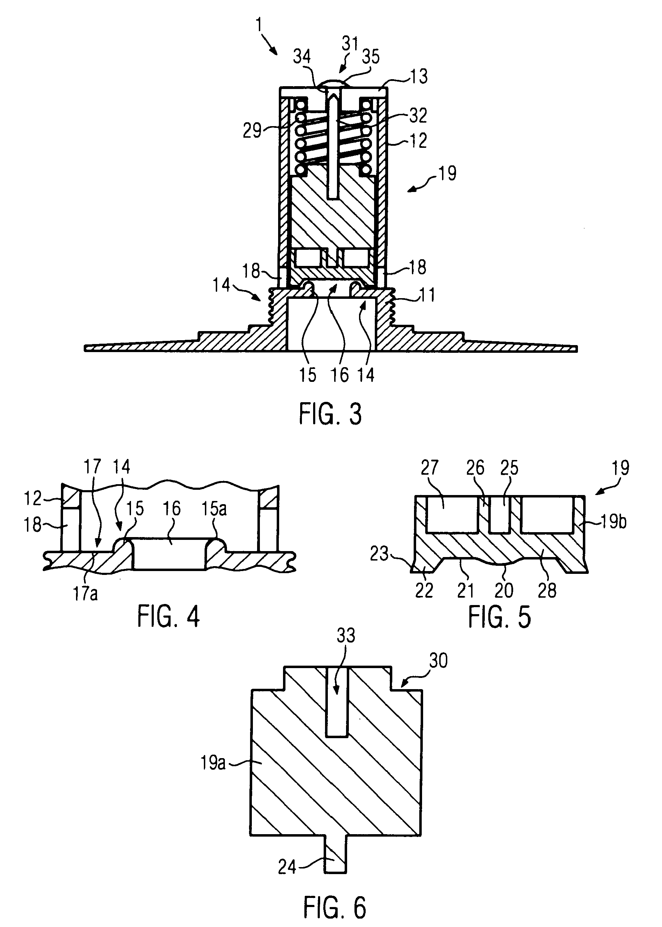

Falls Luft auch in das Innere des Beutels 2 gelangt ist, beispielsweise durch ein Auffalten des Beutels 2 in der in Fig. 6 gezeichneten Weise, wird diese beim Befüllen durch das Ventil 1 aus dem Beutel 2 herausgedrückt.

Zur Sicherung des Ventils 1 im Beutel 2 enthält das Ventil 1 einen Flansch 10 und Gewinde 11. Der Flansch 10 legt sich an die Innenseite des Beutels 2 rund um die Beutelöffnung an, durch die das Ventil 1 nach außen ragt. Am Ventil 1 ist weiterhin ein Gewinde 11 vorgesehen, auf das eine Sicherungsmutter (nicht gezeigt) aufgeschraubt werden kann, wobei die Beutelwandung rund um die Öffnung, durch die das Ventil 1 ragt, zwischen der Sicherungsmutter und dem Flansch 10 eingeklemmt wird. Der Flansch 10 kann weiterhin mit dem Beutel 2 verschweißt werden.

Das Ventil 1 enthält weiterhin ein Gehäuse 12, das bevorzugt aus Kunststoff besteht. Das Gehäuse 12 ist etwa rohrförmig mit im Wesentlichen über seine Höhe konstantem Innendurchmesser. Das Gehäuse 12 ist einstückig mit dem Gewinde 11 und dem Flansch 10 ausgebildet und ist, ebenfalls bevorzugt einstückig, mit einem Ventilsitz 14 versehen. Der Ventilsitz 14 enthält einen Dichtwulst 15, der sich ringförmig um eine an einer Stirnseite des Gehäuses 12 angeordnete Ventilöffnung 16 erstreckt, die in der Nähe des oberen Bereichs des Gewindes 11 und im vertikalen Abstand zum Flansch 10 angeordnet ist. Der ringförmige Dichtwulst 15 enthält eine gekrümmte, nach oben in das Gehäuse 12 weisende Dichtfläche 15a und beginnt unmittelbar um Umfang der Ventilöffnung 16. An der radial außen liegenden Seite des Dichtwulstes 15 ist eine ringförmige Dichtvertiefung 17 vorgesehen, die sich rings um den Dichtwulst 15 erstreckt. Die Vertiefung 17 weist eine im Wesentlichen ebene, untere Fläche 17a auf, die gleichzeitig im Wesentlichen die untere Begrenzung wenigstens einer Ablass- bzw. Abblasöffnung 18 bildet, die sich durch die Wandung des Gehäuses 12 nach außen erstreckt. Auf diese Weise liegt die Sohle der Abblasöffnung unterhalb der Dichtfläche 15a des Dichtwulstes 15, sodass sich dort kein Kondensat ansammeln kann, bzw. sich doch dort absetzendes Kondensat durch die Öffnung ausgeblasen wird und nicht in das Produkt gelangen kann.

Das Ventilteil 19 des erfindungsgemäßen Ventils 1 enthält eine Druckbeaufschlagungsfläche 20, die die Ventilöffnung 16 überspannt und vom Druck im Inneren des Beutels 2 beaufschlagt wird. Die Druckbeaufschlagungsfläche 20 kann sich geringfügig in die Ventilöffnung 16 hineinwölben bzw. einen hineingewölbten Bereich aufweisen. Die Druckbeaufschlagungsfläche 20 wird radial außen liegend von einer Dichtfläche 21 begrenzt, die auf der Dichtfläche 15a des Dichtwulstes 15 aufliegt, wenn sich das Ventilteil 19 auf dem Ventilsitz 14 befindet. Radial außerhalb der Dichtfläche 21 enthält das Ventilteil 19 eine Dichtlippe 22, die axial über die Dichtfläche 21 und die Druckbeaufschlagungsfläche 20 vorsteht. Die Dichtlippe 22 umgreift den Dichtwulst 15 und reicht bis in die Vertiefung 17 hinein. An der Außenseite, bevorzugt im Bereich der Dichtlippe 22, ist das Ventilteil 19 mit einem Dichtvorsprung 23, bevorzugt ein 1/10 mm Wulst, versehen, der sich ebenfalls ringförmig um das Dichtteil 19 erstreckt. Mit Hilfe dieses Dichtvorsprungs 23 wird eine Abdichtung gegenüber dem Gehäuse 12 im Bereich der Auslassöffnung 18 erreicht. Dichtvorsprung 23 und Dichtlippe 22 bilden eine im Wesentlichen konische Form.

Das Ventilteil 19 ist zweiteilig ausgebildet und enthält einen Körper 19a und einen Ventilteller 19b. Der Ventilteller 19b ist über einen Zapfen 24 und eine Ausnehmung 25 am Körper 19a lösbar befestigt. Bevorzugt ist der Zapfen 24 am Körper 19a und die Ausnehmung 25 am Ventilteller 19b angeordnet. Die Ausnehmung ist in einem Sockel 26 vorgesehen, der mittig in einem Hohlraum 27 angeordnet ist, wobei sich der Hohlraum im Wesentlichen über die gesamte Druckbeaufschlagungsfläche 20 und gegebenenfalls Dichtfläche 21 erstreckt und von diesen lediglich durch einen Materialsteg 28 getrennt ist. Diese Ausgestaltung bewirkt eine positive Federwirkung auf die Konusdichtung der Dichtlippe und verhindert ein Vibrieren des Ventiltellers.

Durch die zweiteilige Ausbildung des Ventilteils 19 kann der Ventilteller 19b aus einem relativ flexiblen, elastisch nachgiebigen Material, wie beispielsweise einem Dichtgummi oder dgl., hergestellt werden, während der Körper 19a aus einem starren, druckaufnehmenden Material, wie beispielsweise ein Metall (Stahl), bestehen kann. Der Körper 19a ist deshalb in der Lage, die Beaufschlagung durch eine Feder 29 abzustützen, ohne sich zu verformen. Die Feder 29 besteht bevorzugt aus Edelstahl und stützt sich in einer Federaufnahme 30 am Körper 19a einerseits und an der Abdeckung 13 andererseits ab. Die Abdeckung 13 wird, bevorzugt lösbar, mit dem Gehäuse 12 verbunden.

Das erfindungsgemäße Ventil ist weiterhin mit einer Unversehrtheitsanzeige 31 versehen. Die Unversehrtheitsanzeige 31 enthält einen Stößel 32, der im Körper 19a, beispielsweise in einer Ausnehmung 33, so befestigt ist, dass er sich zusammen mit dem Körper 19a bewegt. Der Stößel 32 ist in einer Öffnung 34 in der Abdeckung 13 geführt. An der Außenseite der Abdeckung 13 ist die Öffnung 34 durch einen Tropfen oder einen Pfropfen 35 eines geeigneten Materials abgedeckt. Dafür eignet sich jedes Material, das einerseits ausreichend fest an der Abdeckung 13 haftet, damit ein unbeabsichtigter Verlust vermieden wird, andererseits jedoch vom Stößel 32 unter dem Ansprechdruck des erfindungsgemäßen Sicherheitsventils 1 abgesprengt oder perforiert oder sonst wie eindeutig feststellbar beeinträchtigt wird, um ein Ansprechen des Sicherheitsventils 1 anzuzeigen.

Ein bevorzugtes Material für diesen Zweck ist beispielsweise Siegellack.

In Abwandlung des beschriebenen und gezeichneten Ausführungsbeispiels ist das erfindungsgemäße Ventil 1 auch für andere Anwendungszwecke einzusetzen. Gegebenenfalls kann das Ventilteil einstückig ausgebildet sein. Auch die Befestigungsmöglichkeit des Ventils am zu überwachenden Behälter, kann verändert werden.

## Patentansprüche

1. Ventil (1), insbesondere Sicherheitsventil, mit einem Ventilgehäuse (12) mit einer Ventilöffnung (16), einem der Ventilöffnung (16) zugeordneten Ventilsitz (14) und einem Ventilteil (19) zum Abdichten der Ventilöffnung (16), **dadurch gekennzeichnet, dass** der Ventilsitz (14) einen Dichtwulst (15) mit einer ringförmigen Dichtfläche (15a) aufweist, der in Richtung des Ventilteils (19) vorsteht.

2. Ventil nach Anspruch 1, **dadurch gekennzeichnet, dass** sich der Dichtwulst (15) unmittelbar an die Ventilöffnung (16) anschließt.

3. Ventil nach Anspruch 1 oder 2, **dadurch gekennzeichnet, dass** das Gehäuse (12) mit einer Auslassöffnung (18) versehen ist, die zumindest teilweise unterhalb der Dichtfläche (15a) des Dichtwulstes (15) angeordnet ist.

4. Ventil nach einem der Ansprüche 1 bis 3, **dadurch gekennzeichnet, dass** das Ventilteil (19) eine auf dem Dichtwulst (15) aufliegende Dichtfläche (21) und eine den Dichtwulst (15) umschließende Dichtlippe (22) aufweist.

5. Ventil nach einem der Ansprüche 1 bis 4, **dadurch gekennzeichnet, dass** das Ventilteil (19) einen nach seitlich außen vorspringenden Dichtvorsprung (23) aufweist.

6. Ventil nach Anspruch 5, **dadurch gekennzeichnet, dass** der Dichtvorsprung (23) an der Außenseite der Dichtlippe (22) vorgesehen ist.

7. Ventil nach Anspruch 5 oder 6, **dadurch gekennzeichnet, dass** der Dichtvorsprung (23) einen Bereich um die Auslassöffnung (18) abdichtet.

8. Ventil nach einem der Ansprüche 1 bis 7, **dadurch gekennzeichnet, dass** das Ventilteil (19) einen Körper (19a) und einen daran lösbar befestigten Ventilteller (19b) aufweist.

9. Ventil nach Anspruch 8, **dadurch gekennzeichnet, dass** der Ventilteller (19b) am Körper (19a) über einen in einer Aufnahmeöffnung (25) angeordneten Dom (24) befestigt ist.

10. Ventil nach einem der Ansprüche 1 bis 9, **dadurch gekennzeichnet, dass** das Ventilteil (19) eine die Ventilöffnung (16) überspannende Druckbeaufschlagungsfläche (20) aufweist.

11. Ventil nach Anspruch 10, **dadurch gekennzeichnet, dass** das Ventilteil (19) einen hinter der Druckbeaufschlagungsfläche (20) vorgesehenen Hohlraum (27) enthält.

12. Ventil nach einem der Ansprüche 1 bis 11, **dadurch gekennzeichnet, dass** das Ventilteil (19) durch eine Feder (29) beaufschlagt ist.

13. Ventil nach einem der Ansprüche 1 bis 3, **gekennzeichnet durch** eine dem Ventil (1) zugeordnete Unversehrtheitsanzeige (31).

14. Ventil nach Anspruch 13, **dadurch gekennzeichnet, dass** die Unversehrtheitsanzeige (31) eine vom Ventilteil (19) bewegbaren Stößel (32) und einen Materialpfropf (35), insbesondere aus Siegellack, enthält.

15. Ventil nach einem der Ansprüche 1 bis 14, **gekennzeichnet durch** ein Gehäuse (12) aus Kunststoff, an dem die Ventilöffnung (16) und der Ventilsitz (14) mit dem Dichtwulst (15) angeformt sind.

## Geänderte Patentansprüche

### Geänderte Patentansprüche gemäss Regel 137(2) EPÜ.

**1.** Ventil (1), insbesondere Sicherheitsventil, mit einem Ventilgehäuse (12) mit einer Ventilöffnung (16), einem der Ventilöffnung (16) zugeordneten Ventilsitz (14) und einem Ventilteil (19) mit einem Körper (19a) und einem Ventilteller (19b) zum Abdichten der Ventilöffnung (16), wobei der Ventilsitz (14) einen Dichtwulst (15) mit einer ringförmigen Dichtfläche (15a) aufweist, der in Richtung des Ventilteils (19) vorsteht und der Ventilteller (19b) eine die Ventilöffnung (16) überspannende Druckbeaufschlagungsfläche (20) und eine radial außen liegende Dichtfläche (21) enthält, **dadurch gekennzeichnet, dass** das Ventilteil (19) einen Körper (19a) und einen daran lösbar befestigten Ventilteller (19b) aufweist, wobei der Ventilteller (19b) aus einem flexiblen, elastisch nachgiebigen Material und der Körper (19a) aus einem starren, druckaufnehmenden Material gefertigt ist, und das Ventilteil (19) einen hinter der Druckbeaufschlagungsfläche (20) vorgesehenen Hohlraum (27) enthält, der sich, von einem Materialsteg (28) des Ventiltellers (19b) getrennt, im Wesentlichen über die gesamte Druckbeaufschlagungsfläche (20) und Dichtfläche (21) erstreckt.

**2.** Ventil nach Anspruch 1, **dadurch gekennzeichnet, dass** sich der Dichtwulst (15) unmittelbar an die Ventilöffnung (16) anschließt.

**3.** Ventil nach Anspruch 1 oder 2, **dadurch gekennzeichnet, dass** das Gehäuse (12) mit einer Auslassöffnung (18) versehen ist, die zumindest teilweise unterhalb der Dichtfläche (15a) des Dichtwulstes (15) angeordnet ist.

**4.** Ventil nach einem der Ansprüche 1 bis 3, **dadurch gekennzeichnet, dass** das Ventilteil (19) eine auf dem Dichtwulst (15) aufliegende Dichtfläche (21) und eine den Dichtwulst (15) umschließende Dichtlippe (22) aufweist.

**5.** Ventil nach einem der Ansprüche 1 bis 4, **dadurch gekennzeichnet, dass** das Ventilteil (19) einen nach seitlich außen vorspringenden Dichtvorsprung (23) aufweist.

**6.** Ventil nach Anspruch 5, **dadurch gekennzeichnet, dass** der Dichtvorsprung (23) an der Außenseite der Dichtlippe (22) vorgesehen ist.

**7.** Ventil nach Anspruch 5 oder 6, **dadurch gekennzeichnet, dass** der Dichtvorsprung (23) einen Bereich um die Auslassöffnung (18) abdichtet.

**8.** Ventil nach einem der Ansprüche 1 bis 7, **dadurch gekennzeichnet, dass** der Ventilteller (19b) am Körper (19a) über einen in einer Aufnahmeöffnung (25) angeordneten Dorn (24) befestigt ist.

**9.** Ventil nach einem der Ansprüche 1 bis 8, **dadurch gekennzeichnet, dass** das Ventilteil (19) durch eine Feder (29) beaufschlagt ist.

**10.** Ventil nach einem der Ansprüche 1 bis 9, **gekennzeichnet durch** ein Gehäuse (12) aus Kunststoff, an dem die Ventilöffnung (16) und der Ventilsitz (14) mit dem Dichtwulst (15) angeformt sind.
